# EUROPÄISCHE PATENTSCHRIFT

(11) **EP 0 815 739 B1**
(45) Veröffentlichungstag und Bekanntmachung des Hinweises auf die Patenterteilung: **06.10.1999**
(21) Anmeldenummer: 96110919.6
(22) Anmeldetag: 05.07.1996
(51) Int. Cl.: A23G 3/00, A23G 3/02

(54) **Trockenschaum-Zuckerware und Verfahren zu ihrer Herstellung**
Dry foam confection and process for making the same
Confiserie expansée sèche et procédé de fabrication

(43) Veröffentlichungstag der Anmeldung: 07.01.1998
(73) Patentinhaber: Storck Service GmbH, 33790 Halle (DE)
(72) Erfinder: Claus, Matthias, 33790 Halle (DE)
(74) Vertreter: TER MEER STEINMEISTER & PARTNER GbR

(56) Entgegenhaltungen:
- EP-A- 0 114 555
- BE-A- 423 168
- BE-A- 688 058
- BE-A- 689 702
- CH-A- 394 777
- CH-A- 656 290
- DE-A- 1 492 838
- DE-A- 3 638 662
- DE-A- 4 421 706
- FR-A- 2 318 589
- FR-A- 2 328 407
- GB-A- 577 994
- US-A- 1 601 302
- US-A- 2 082 312

## Beschreibung

Die vorliegende Erfindung betrifft eine Trockenschaum-Zuckerware, in Form eines sprödharten bis mürbe-knusprigen Produkts auf der Grundlage eines geschäumten Süßungsmittels, sowie ein Verfahren zu Ihrer Herstellung.

Schaumzuckerwaren sind leichte, aufgeschäumte Zuckerwaren unterschiedlicher Konsistenz, die durch Aufschlagen von schaumbildenen Stoffen, wie beispielsweise Eialbumin oder Gelatine, unter Zusatz von Zucker und/oder Glucosesirup und gegebenenfalls unter Verwendung von aromatisierenden Bestandteilen hergestellt worden sind, so zum Beispiel die Körper von Negerküssen. Diese Produkte besitzen jedoch eine weiche, feuchte, cremige Schaumstruktur und werden beispielsweise im Fall von Negerküssen auf einer Waffelunterlage und mit einem Überzug aus Schokolade angeboten. Es ist auch bekannt, daß Trockenschaum-Zuckerwaren eine feste Konsistenz aufweisen können und durch Trocknen der aufgeschlagenen Schaumzuckerwaren hergestellt werden können. In diesem Fall besitzen sie jedoch eine klebrig-zähe, wattige Konsistenz.

Die GB-A-5 77 994 offenbart eine Trockenschaum-Zuckerware in Form eines sprödharten bis mürbe-knusprigen, von Eiweißhaltigen Schaumbildnern freien, geschäumten, trockenen Formprodukten mit einer Dichte von 0,2 bis 0,6 g/cm³ und einem Süßungsmittelgehalt von 20 bis 98 Gew.%, einem Restwassergehalt von 0,01 bis 5 Gew.% und gegebenenfalls einem Gehalt an färbenden Bestandteilen als Rest.

Aus der DE-PS 32 06 751 ist ein Verfahren zur Herstellung aufgeschäumter, gelatinierter Stärkeprodukte bekannt, welches darin besteht, granulierte oder pulverisierte Stärke oder stärkehaltige Materialien in Gegenwart von 10 bis 30 Gew.-% Wasser und einem gasbildenden oder entwickelnden Treibmittel beispielsweise auf der Grundlage eines Metallcarbonats und einer organischen oder anorganischen Säure, in einer Extruderpresse auf Temperaturen von 60 bis 220°C zu erhitzen und zu extrudieren. Hierbei erhält man einen Stärkeschaum in Form eines Stranges, der nach dem Abkühlen zerkleinert und gegebenenfalls pulverisiert werden kann, der jedoch als Folge des angewandten Extrusionsverfahrens auf einen Zuckergehalt von 10 bis 15 Gew.-% beschränkt ist und eine weiche, wattige Konsistenz besitzt. Es ist angegeben, daß durch Ausbacken in Öl knusprige Produkte erhalten werden können.

A. Slawatycki (Confectionary Production, vol. 40, No. 11 (1974), 516-519) vermittelt Vorschläge für die Herstellung von krossen, belüfteten Süßwarenprodukten. Die Herstellung umfaßt die Verwendung von eiweißhaltigen Schaumbildern wie Gelatine oder Albumin als zwingende Bestandteile in Kombination mit Carbonaten und einer Mischung von Säuren. Jedoch ergeben die Rezepturen Produkte mit hoher Dichte bzw. gallertartige Massen, die geschmacklich äußerst unbefriedigend sind.

Gegenstand der europäischen Patentanmeldung 0 114 555 sind andererseits Lutschpastillen auf der Grundlage von Sorbit oder kristalliner Fructose, welche eine Vielzahl von Hohlräumen, vorzugsweise Mikrohohlräumen aufweisen, die zumindest zum Teil mit der Oberfläche kommunizieren, so daß sich eine poröse Oberfläche ergibt. Diese Mikrohohlräume dienen dazu, eine schnelle und gleichmäßigere und vollständigere Trocknung der Masse und eine regelmäßige Oberfläche sicherzustellen. Es ist angegeben, daß die Lutschpastillen eine Dichte aufweisen, die bis zu 50% geringer ist als die von in herkömmlicher Weise hergestellten Lutschpastillen. Die Herstellung erfolgt dadurch, daß man in eine Pastillengrundlage die Sorbit oder Fructose und ein Bindemittel, wie eine Mischung aus Gummen und/oder Gelatine, enthält, eine Substanz einarbeitet, die nach dem Auswalzen und Zerschneiden der Masse die angestrebten Mikrohohlräume erzeugt, beispielsweise durch Walzen mit Hilfe einer Nadelwalze oder im Verlauf des Erhitzens oder gegebenenfalls durch eine chemische Gasfreisetzung aus einem Carbonat, wie Natriumbicarbonat, und einer organischen Säure, wie Gluconsäure. Die in dieser Weise hergestellen Lutschpastillen besitzen einen Feststoffgehalt von bis zu 98,2% und eine minimale gemessene Dichte von 0.89 g/cm³.

Trotz dieser vergleichsweise geringeren Dichte als bei herkömmlichen Lutschpastillen vermögen diese vorbekannten, Mikrohohlräume aufweisenden Lutschpastillen in ihren organoleptischen Eigenschaften und dem Beißverhalten beim Verzehr, sowie der Leichtigkeit ihrer Konsistenz nicht vollständig zu befriedigen, was die Tatsache zu erklären vermag, daß sich die Produkte des angesprochenen Standes der Technik auf dem Markt nicht haben durchsetzen können.

Die Augabe der vorliegenden Erfindung besteht somit darin, eine Trockenschaum-Zuckerware anzugeben, die in einfacher Weise hergestellt werden kann, beliebig aromatisiert und in ihrem Geschmackseindruck sowie ihrer Struktur modifiziert werden kann und auf Grund ihrer Struktur und Konsistenz einen neuartigen Genußeindruck vermittelt.

Diese Aufgabe wird gelöst durch die Trockenschaum-Zuckerware gemäß Anspruch 1 und das Verfahren zur Herstellung dieser Trockenschaum-Zuckerware gemäß Anspruch 15. Die Unteransprüche betreffen bevorzugte Ausführungsformen dieses Erfindungsgegenstandes.

Im Gegensatz zu den eingangs beschriebenen Schaumzuckerwaren des Standes der Technik liegt die erfindungsgemäße Trockenschaum-Zuckerware in Form eines trockenen, mürben bis harten, knusprigen Produkts vor, welches In praktisch jeder denkbaren Art durch Einsatz geeigneter Rohstoffe gestaltet werden kann, beispielsweise mit fruchtigen Aromastoffen versehen, gefärbt, mit festen Süßwarenbestandteilen versetzt und mit einer Oberflächenschicht bedeckt werden kann.

Die erfindungsgemäßen Trockenschaum-Zuckerwaren sind frei von eiweißhaltigen Schaumbildnern wie Gelatine oder Albumin, die nach dem Stand der Technik dazu verwendet werden, einen stabilen Schaum namentlich durch Aufschlagen zu erzeugen. Diese eiweißhaltigen Schaumbildner sind insofern nachteilig, als sie eine ungeeignete Konsistenz des Produktes und geschmacklich unbefriedigende Effekte wie das Kleben an den Zähnen verursachen.

Dabei sind die Poren oder Hohlräume der Trockenschaum-Zuckerware zur Oberfläche hin nicht geöffnet sondern abgesehen von einzelnen beim Aufblähen geplatzten Hohlräumen geschlossen, und besitzen einen Durchmesser im Bereich von 0,1 bis 2,5 mm, vorzugsweise von 0,5 bis 1,5 mm, der damit deutlich oberhalb des Bereiches von den oben angesprochenen Mikrohohlräume liegt. In Abhängigkeit von den Trocknungsbedingungen, namentlich der Trocknungstemperatur, kann die Porenverteilung innerhalb der Trockenschaum-Zuckerware gleichmäßig sein oder kann einen großen Mittelhohlraum mit einem Durchmesser von bis zu 10 mm, vorzugsweise von 2 bis 8 mm noch bevorzugter von 3 bis 5 mm, umfassen, der von einer Vielzahl von kleineren Hohlräumen zur Oberfläche hin umgeben ist.

Die erfindungsgemäße Trockenschaum-Zuckerware enthält als Süßungsmittel ein oder mehrere Kohlenhydrate, Zuckeraustauschstoffe und/oder synthetische Süßstoffe. Als Süßungsmittel sind beispielsweise Zuckerstoffe wie Saccharose, Glucose, Fructose, Maltose, Lactose, Glucosesirup oder Maltodextrin, Zuckeralkohole wie Sorbit, Isomalt, Maltit, Maltitsirup, Lactit, Xylit, Mannit oder auch Polyglucosen wie Polydextrose geeignet. Man kann auch synthetische Süßungsmittel, wie Saccharin, Cyclamate oder Aspartame, gegebenenfalls in Kombination mit den angesprochenen Kohlenhydraten und Zuckeraustauschstoffen einsetzen.

Gemäß einer bevorzugten Ausführungsform enthält die beanspruchte Trockenschaum-Zuckerware zur Einstellung einer bestimmten Textur und/oder Porengröße ein Hydrokolloid in einer Menge von 0 bis 30 Gew.-%, vorzugsweise 1 bis 8 Gew.-%. Hierfür geeignete Hydrokolloide sind vorzugsweise Polysaccharide, wie bespielsweise Gummi arabicum, Tragant, Gellan, Stärke, modifizierte Stärke, Pectin, Carrageen, Johannisbrotkernmehl, Xanthan, Alginate, Guarkernmehl, Agar und/oder Glucomannan.

Die erfindungsgemäße Trockenschaum-Zuckerware ist vorzugsweise mit in situ gebildeten Kohlendioxid aufgeschäumt, welches in der als Ausgangsmaterial eingesetzten hochviskosen Mischung durch ein für Nahrungsmittel geeignetes Carbonat und einer anorganischen und/oder organischen Säure freigesetzt wird. Mit Vorteil verwendet man als für Nahrungsmittel geeignete Carbonate Calciumcarbonat, Natriumcarbonat, Natriumhydrogencarbonat, Ammoniumcarbonat, Ammoniumhydrogencarbonat und/oder Magnesiumcarbonat, vorzugsweise in Mengen von 0,3 bis 5 Gew.-%, vorzugsweise 1 bis 4 Gew.-% und als anorganische Säure Phosphorsäure, während organische Säuren, beispielsweise Citronensäure, Weinsäure, Äpfelsäure und/oder Milchsäure bevorzugt sind, welche Säuren vorzugsweise In Mengen von 0.5 bis 5 Gew.-% eingesetzt werden. Dabei werden das Carbonat und die Säure vorzugsweise in für die Bildung von Kohlendioxid stöchiometrischen Mengen eingesetzt.

In Abhängigkeit von der Menge und der Teilchengröße der eingesetzten Bestandteile zur in situ-Bildung von Kohlendioxid können die Porengröße und die angestrebte Dichte von 0,2 bis 0,6 g/cm³, vorzugsweise 0,3 bis 0,5 g/cm³ des fertigen Süßwarenproduktes eingestellt werden.

Die erfindungsgemäße Trockenschaum-Zuckerware kann als geruchsgebende, geschmacksgebende und/oder färbende Bestandteile beispielsweise natürliche oder künstliche Aromatisierungsmittel, Vitamine, Mineralstoffe und/oder Färbemittel enthalten.

Die erfindungsgemäße Trockenschaum-Zuckerware kann weiterhin eine oder mehrere Oberflächenbeschichtungen aufweisen und/oder andere Lebensmittelbestandteile, wie feste Süßwarenbestandteile, enthalten, wobei die Gesamtmenge von Oberflächenbeschichtung und Lebensmittelbestandteile 0 bis 80 Gew.-%, vorzugsweise 0,2 bis 10 Gew.-% beträgt. Die Oberflächenbeschichtung besteht vorzugsweise aus Schokolade und/oder einer Glasur, beispielsweise einer Fettglasur, und kann mit beispielsweise Kokosflocken, Krokant, Liebesperlchen oder Kombinationen davon versetzt und/oder bestreut sein. Die erfindungsgemäße Trockenschaum-Zuckerware kann weiterhin als feste Süßwarenbestandteile beispielsweise Hartkaramellstückchen, Krokant, gegebenenfalls geröstete Samenkerne, wie Walnüsse, Haselnüsse, Mandeln, Cashewnüsse, Erdnüsse, Sesamsamen und dergleichen, und/oder Fruchtbestandteile enthalten.

Gemäß einer bevorzugten Ausführungsform der Erfindung erfolgt das Trocknen in Formen, beispielsweise porösen Silikonformen oder in Stärkepuderformen, beispielsweise nach dem Mogulverfahren, da es in dieser Weise gelingt, der beanspruchten Trockenschaum-Zuckerware eine beliebige gewünschte Form zu verleihen. Nach dem Stärkepuderverfahren erfolgt dies so, daß man die gewünschten Formen durch Einprägen in eine Stärkepuderschicht ausbildet und dann die unmittelbar zuvor hergestelle flüssige bis hochviskose wäßrige Mischung in einer solchen Menge in die Formen einführt, daß diese beim Aufschäumen gerade ausgefüllt werden.

Es ist weiterhin möglich, die erfindungsgemäße Trockenschaum-Zuckerware durch Trocknen mit Hilfe eines Vakuumbandtrockners zu bewirken.

Eine weitere Ausführungsform besteht darin, die flüssige bis hochviskose Mischung aus dem Süßungsmittel, den zur in situ-Bildung des gasförmigen Kohlendioxids notwendigen Bestandteilen in Form von Tropfen in einen Wirbelschichtrockner oder Trockenturm einzubringen und im freien Fall zu trocknen und gleichzeitig aufzuschäumen, wobei das Produkt in Kugelform anfällt.

Das Trocknen in Stärkepuderformen erstreckt sich von einigen Stunden bis zu mehreren Tagen in Abhängigkeit von der angewandten Trocknungstemperatur, welche auch dazu geeignet Ist, die Porenstruktur des Produktes zu beeinflussen. Die Trocknungstemperatur kann zwischen Raumtemperatur und einer Temperatur von 40 bis 80°C, vorzugsweise 40 bis 50°C, liegen, wobei bei niedrigen Temperaturen eine gleichmäßigere Porenverteilung erreicht wird, während bei höheren Temperaturen ein Produkt mit einem großen Hohlraum in der Mitte erhalten wird.

Das erfindungsgemäß hergestellte Produkt ist locker und sprödhart bis mürbe und besitzt eine leichte, knusprige Textur mit einer deutlich geringeren Dichte als die herkömmlichen Trockenschaum-Zuckerwaren mit ähnlich niedrigen Wassergehalt, so daß das Produkt beim Lutschen oder Zerbeißen ein angenehmes Genußerlebnis vermittelt.

Die erfindungsgemäße Trockenschaum-Zuckerware kann In beliebiger Weise aromatisiert werden und zwar mit künstlichen oder natürlichen Fruchtaromen beispielsweise den Aromen von Äpfeln, Birnen, Kirschen, Himbeeren, Erdbeeren, Zwetschgen,Pflaumen, Orangen, Zitronen, Pfirsiche, Aprikosen, Ananas oder auch anderen Aromen wie, Minze, Eukalyptus, Zimt, Mokka, Karamel, Lakritze, Schokolade, Nußaroma, Kokosaroma etc. oder kann auch feste Bestandteile enthalten, die häufig in Süßwaren verwendet werden wie bespielsweise ganze oder zerkleinerte Samenkerne wie Nüsse, Hartkaramellstückchen oder feste Fruchtbestandteile wie beispielsweise Kokosraspeln, getrocknete Fruchtstückchen und dergleichen. Die Trockenschaum-Zuckerware kann weiterhin Vitamine, Mineralstoffe und/oder Färbemittel enthalten und kann gewünschtenfalls mit ganz oder teileweise mit einem oder mehreren Oberflächenüberzügen aus beispielsweise Schokolade, einer Glasur oder einer Fettglasur versehen werden, die ihrerseits zusätzliche feste Nahrungsmittel und/oder Konfektbestandteile enthalten kann wie bespielsweise Nüsse oder Nußbestandteile, Backprodukte, geröstete Getreideflocken und dergleichen.

Die folgenden Beispiele, in denen die erfindungsgemäße Porengröße nicht angegeben wird, dienen der weiteren Erläuterung der Erfindung.

### Beispiel 1

### Herstellung einer neutralen Trockenschaumzuckerware

Man bereitet zunächst eine Mischung aus 73,4 kg Zucker, 14,6 kg Sorbitsirup mit einem Trockensubstanzgehalt von 70 %, 8,7 kg maltosehaltigem Glukosesirup mit einem Trockensubstanzgehalt von 79 %, 16,6 kg Wasser, 2,4 kg Calciumcarbonat und 8,9 kg einer Gummiarabicum-Lösung mit einem Trockensubstanzgehalt von 45 %, die man mit Wasser bei 50°C im Verhältnis von 1:1 vorgelöst hat. Man erwärmt die Mischung auf 80°C, gibt 2 kg Citronensäure mit einem Trockensubstanzgehalt von 50 % und 0,1 kg Aromastoffe zu und mischt intensiv durch. Man dosiert die aufgeschäumte Masse mit einer geeigneten Vorrichtung in vorbereitete Kästen, die mit Stärkepuder gefüllt sind, in welche durch Eindrücken Formen erzeugt worden sind. Man trocknet das Material während 20 Stunden bei 45°C und einer relativen Luftfeuchtigkeit von 30 bis 40 %. Man trennt das Stärkepuder durch Absieben, Abbürsten und Abblasen ab und erhält ein trockenes, mürbes, hartes, knuspriges, wohlschmeckendes Produkt mit ausgezeichneten organoleptischen Eigenschaften, welches nicht an den Zähnen klebt und einen Süßungsmittelgehalt von 90,5 Gew.-%, einen Restwassergehalt von 2 Gew.-%, einen Gummiarabicum-Anteil von 4 Gew.-% und eine Dichte von 0,4 g/cm³ aufweist.

Die erhaltene Trockenschaum-Zuckerware kann als solche verpackt und vertrieben oder beispielsweise mit einem Schokoladenüberzug versehen werden.

### Beispiel 2

### Saure Trockenschaum-Zuckerware

Man bereitet zunächst eine Mischung aus 72,3 kg Zucker, 14,4 kg Sorbitsirup mit einem Trockensubstanzgehalt von 70 %, 8,6 kg maltosehaltigem Glukosesirup mit einem Trockensubstanzgehalt von 79 %, 16,3 kg Wasser, 2,4 kg Calciumcarbonat und 8,9 kg einer Gummiarabicum-Lösung mit einem Trockensubstanzgehalt von 45 %, die man mit Wasser bei 50°C im Verhältnis von 1:1 vorgelöst hat. Man erwärmt die Mischung auf 80°C, gibt 4,8 kg Citronensäure mit einem Trockensubstanzgehalt von 50 % und 0,1 kg Aromastoffe zu und mischt intensiv durch. Man dosiert die aufgeschäumte Masse mit einer geeigneten Vorrichtung In vorbereitete Kästen, die mit Stärkepuder gefüllt sind, in welche durch Eindrücken Formen erzeugt worden sind. Man trocknet das Material während 20 Stunden bei 45°C und einer relativen Luftfeuchtigkeit von 30 bis 40 %. Man trennt das Stärkepuder durch Absieben, Abbürsten und Abblasen ab und erhält ein trockenes, mürbes, hartes, knuspriges, wohlschmeckendes Produkt mit ausgezeichneten organoleptischen Eigenschaften, welches nicht an den Zähnen klebt und einen Süßungsmittelgehalt von 89,1 Gew.-%, einen Restwassergehalt von 2 Gew.-%, einen Gummiarabicum-Anteil von 4 Gew.-% und eine Dichte von 0,5 g/cm³ aufweist.

Aufgrund des angewandten Säure-Carbonat-Verhältnisses besitzt die Trockenschaum-Zuckerware einen säuerlichen Geschmack.

## Patentansprüche

1. Trockenschaum-Zuckerware, in Form eines sprödharten bis mürbe-knusprigen, von eiweißhaltigen Schaumbildnern freien, mit Kohlendioxid geschäumten, trockenen Formprodukts mit einer Dichte von 0,2 bis 0,6 g/cm³ - als geschäumtes Basismaterial ohne Oberflächenbeschichtung und feste Süßwarenbestandteile gerechnet - einer Porenstruktur mit geschlossenporigen Hohlräumen mit einem durchschnittlichen Durchmesser von 0,1 bis 2,5 mm, einem Süßungsmittelgehalt von 20 bis 98 Gew.-%, einem Restwassergehalt von 0,01 bis 5 Gew.-% und gegebenenfalls einem Gehalt an geruchsgebenden. geschmacksgebenden, färbenden und/oder die Beschaffenheit beeinflussenden Bestandteilen als Rest.

2. Trockenschaum-Zuckerware nach Anspruch 1, **dadurch gekennzeichnet,** daß sie als Süßungsmittel ein oder mehrere Kohlenhydrate, Zuckeraustauschstoffe und/oder Süßstoffe enthält.

3. Trockenschaum-Zuckerware nach Anspruch 2, **dadurch gekennzeichnet,** daß sie als Süßungsmittel Saccharose, Glucose, Fructose, Maltose, Lactose, Glucosesirup, Maltodextrin, Sorbit, Isomalt, Maltit, Maltitsirup, Lactit, Xylit, Mannit, Polydextrose und/oder synthetische Süßungsmittel, wie Saccharin, Cyclamate und Aspartame enthält.

4. Trockenschaum-Zuckerware nach mindestens einem der Ansprüche 1 bis 3, **dadurch gekennzeichnet,** daß die Porenstruktur Hohlräume mit einem durchschnittlichen Durchmesser 0,5 bis 1,5 mm aufweist.

5. Trockenschaum-Zuckerware nach Anspruch 1 bis 4, **dadurch gekennzeichnet,** daß sie einen von der gleichmäßigen Porenstruktur umgebenden Mittelhohlraum mit einem durchschnittlichen Durchmesser von bis zu 10 mm, vorzugsweise von 3 bis 5 mm aufweist.

6. Trockenschaum-Zuckerware nach den Ansprüchen 1 bis 5, **dadurch gekennzeichnet,** daß sie zusätzlich ein Hydrokolloid in einer Menge von 0 bis 30 Gew.-%, vorzugsweise 1 bis 8 Gew.-% enthält.

7. Trockenschaum-Zuckerware nach Anspruch 6, **dadurch gekennzeichnet,** daß sie als Hydrokolloid Gummi arabicum, Tragant, Gellan,Stärke, modifizierte Stärke, Pektin, Carrageen, Johannisbrotkernmehl, Xanthan, ein Alginat, Guarkernmehl, Agar und/oder Glucomannan enthält.

8. Trockenschaum-Zuckerware nach mindestens einem der Ansprüche 1 bis 7, **dadurch gekennzeichnet,** daß sie einen Restwassergehalt von 1 bis 2 Gew.-% aufweist.

9. Trockenschaum-Zuckerware nach mindestens einem der Ansprüche 1 bis 8, **dadurch gekennzeichnet,** daß sie mit in situ gebildetem Kohlendioxid aufgeschäumt ist.

10. Trockenschaum-Zuckerware nach Anspruch 9, **dadurch gekennzeichnet,** daß sie mit aus einem für Nahrungsmittel geeigneten Carbonat und einer anorganischen und/oder organischen Säure in situ gebildetem Kohlendioxid aufgeschäumt ist.

11. Trockenschaum-Zuckerware nach Anspruch 10, **dadurch gekennzeichnet,** daß sie unter Verwendung von Calciumcarbonat, Natriumcarbonat, Natriumhydrogencarbonat, Ammoniumcarbonat, Ammoniumhydrogencarbonat und/oder Magnesiumcarbonat als Carbonat und Phosphorsäure, Citronensäure, Weinsäure, Äpfelsäure und/oder Milchsäure als Säure aufgeschäumt ist.

12. Trockenschaum-Zuckerware nach mindestens einem der vorhergehenden Ansprüche, **dadurch gekennzeichnet,** daß sie als geruchsgebende, geschmacksgebende und/oder färbende Bestandteile natürliche und/oder künstliche Aromatisierungsmittel, Vitamine, Mineralstoffe und/oder Färbemittel enthält.

13. Trockenschaum-Zuckerware nach mindestens einem der vorhergehenden Ansprüche, **dadurch gekennzeichnet,** daß sie eine Oberflächenbeschichtung und/oder Lebensmittelbestandteile in einer Gesamtmenge von 0 bis 80 Gew.-%, vorzugsweise von 0,2 bis 10 Gew.-% aufweist.

14. Trockenschaum-Zuckerware nach Anspruch 13, **dadurch gekennzeichnet,** daß sie eine Oberflächenbeschichtung aus Schokolade und/oder einer Glasur aufweist und als Lebensmittelbestandteile feste Süßwarenbestandteile, wie Hartkaramellstückchen, Krokant, Samenkerne, wie Walnüsse, Haselnüsse, Mandeln und Erdnüsse, und/oder Fruchtbestandteile, umfaßt.

15. Verfahren zur Herstellung der Trockenschaum-Zuckerware nach den Ansprüchen 1 bis 12, **dadurch gekennzeichnet,** daß man eine flüssige bis hochviskose wäßrige Mischung mit einem Feststoffgehalt von 70 bis 90 Gew.-% aus dem Süßungsmittel in einer einen Süßungsmittelgehalt von 20 bis 98 Gew.-% ergebenden Menge, den zur in situ-Bildung des gasförmigen Kohlendioxids notwendigen Bestandteilen sowie gegebenenfalls einem oder mehreren Hydrokolloiden, natürlichen und/oder künstlichen Aromatisierungsmitteln, Duftstoffen, Vitaminen, Mineralstoffen und/oder Färbemitteln und Wasser als Rest unter Aufschäumen auf einen Wassergehalt von 0,01 bis 5 Gew.-% und eine Dichte von 0,2 bis 0,6 g/cm³ - als geschäumtes Basismaterial ohne Oberflächenbeschichtung und feste Süßwarenbestandteile gerechnet - und einer Porenstruktur mit geschlossenporigen Hohlräumen mit einem durchschnittlichen Durchmesser von 0,1 bis 2,5 mm, trocknet.

16. Verfahren nach Anspruch 15, **dadurch gekennzeichnet,** daß man das Trocknen in Formen bewirkt.

17. Verfahren nach Anspruch 15, **dadurch gekennzeichnet,** daß man das Trocknen in porösen Silikonformen oder In Stärkepuderformen bewirkt.

18. Verfahren nach Anspruch 15, **dadurch gekennzeichnet,** daß man das Trocknen mit Hilfe eines Vakuumbandtrockners bewirkt.

19. Verfahren nach Anspruch 15, **dadurch gekennzeichnet,** daß man das Trocknen im freien Fall im Trockenturm oder einem Wirbelschichttrockner bewirkt.

## Claims

1. Dry foam confection in the form of a brittle to friable-crispy dry shaped product which is free of protein-containing foam formers and is formed using carbon dioxide and having a density of 0.2 to 0.6 g/cm³ calculated as foamed based material without surface coating and solid confectionery constituents a pore structure having closed-pore hollow cavities having an average diameter of 0.1 to 2.5 mm, a sweetening agent content of 20 to 98 wt.%, a residual water content of 0.01 to 5 wt.% and optionally a content of aroma giving, taste-giving, colouring constituents and/or constituents influencing the constitution as the remainder.

2. Dry foam confection according to claim 1, characterised in that it contains one or more carbohydrates, sugar substitutes and/or sweeteners as sweetening agent.

3. Dry foam confection according to claim 2, characterised in that it contains saccharose, glucose, fructose, maltose, lactose, glucose syrup, maltodextrin, sorbitol, isomalt, maltitol, maltitol syrup, lactitol, xylitol, mannitol, polydextrose and/or synthetic sweetening agents, such as saccharin, cyclamates and aspartame, as sweetening agent.

4. Dry foam confection according to at least one of claims 1 to 3, characterised in that the pore structure has hollow cavities having an average diameter of 0.5 to 1.5 mm.

5. Dry foam confection according to claim 1 to 4, characterised in that it has a central hollow cavity surrounded by the uniform pore structure and having an average diameter of up to 10 mm, preferably 3 to 5 mm.

6. Dry foam confection according to claims 1 to 5, characterised in that it additionally contains a hydrocolloid in a quantity from 0 to 30 wt.%, preferably 1 to 8 wt.%.

7. Dry foam confection according to claim 6, characterised in that it contains gum arabic, tragacanth, gellan, starch, modified starch, pectin, carrageen, carob bean flour, xanthan, an alginate, guar bean flour, agar and/or glucomannan, as hydrocolloid.

8. Dry foam confection according to at least one of claims 1 to 7, characterised in that it has a residual water content of 1 to 2 wt.%.

9. Dry foam confection according to at least one of claims 1 to 8, characterised in that it is foamed using carbon dioxide formed in situ.

10. Dry foam confection according to claim 9, characterised in that it is foamed using carbon dioxide formed in situ from a carbonate suitable for foodstuffs and an inorganic and/or organic acid.

11. Dry foam confection according to claim 10, characterised in that it is foamed using calcium carbonate, sodium carbonate, sodium bicarbonate, ammonium carbonate, ammonium bicarbonate and/or magnesium carbonate as the carbonate and phosphoric acid, citric acid, tartaric acid, malic acid and/or lactic acid as the acid.

12. Dry foam confection according to at least one of the preceding claims, characterised in that it contains as aroma-giving, taste-giving and/or colouring constituents, natural and/or artificial flavourings, vitamins, minerals and/or dyestuffs.

13. Dry foam confection according to at least one of the preceding claims, characterised in that it has a surface coating and/or foodstuff constituents in a total quantity of 0 to 80 wt.%, preferably 0.2 to 10 wt.%.

14. Dry foam confection according to claim 13, characterised in that it has a surface coating of chocolate and/or a glaze and includes as foodstuff constituents solid confectionery constituents, such as hard caramel pieces, cracknel, seed kernels, such as walnuts, hazelnuts, almonds and peanuts, and/or fruit constituents.

15. Process for producing the dry foam confection according to claims 1 to 12, characterised in that a liquid to highly viscous aqueous mixture having a solids content of 70 to 90 wt.% comprising sweetening agent in a quantity producing a sweetening agent content of 20 to 98 wt.%, the constituents necessary for in situ formation of the gaseous carbon dioxide as well as optionally one or more hydrocolloids, natural and/or artificial flavourings, fragrances, vitamins, minerals and/or dyestuffs and water as the remainder, while foaming to a water content of 0.01 to 5 wt.% and a density of 0.2 to 0.6 g/cm³ - calculated as foamed base material without surface coating and solid confectionery constituents - and a pore structure having closed-pore hollow cavities having an average diameter of 0.1 to 2.5 mm, is dried.

16. Process according to claim 15, characterised in that drying is effected in moulds.

17. Process according to claim 15, characterised in that drying is effected in porous silicone moulds or in starch powder moulds.

18. Process according to claim 15, characterised in that drying is effected with the aid of a vacuum belt drier.

19. Process according to claim 15, characterised in that drying is effected in free fall in a drying tower or a fluidised bed drier.

## Revendications

1. Confiserie expansée sèche, sous forme d'un produit moulé sec, dur et cassant à friable-croustillant, exempt d'agents d'expansion contenant des protéines, expansé avec du dioxyde de carbone, ayant une densité de 0,2 à 0,6 g/cm³ - calculée en tant que produit de base expansé sans enrobage superficiel ni composants solides de confiserie - une structure poreuse à cavités de type cellule fermée ayant un diamètre moyen de 0,1 à 2,5 mm, une teneur en édulcorant de 20 à 98 % en poids, une teneur en eau résiduelle de 0,01 à 5 % en poids et éventuellement une teneur en composants colorants, aromatisants, odorants et/ou composants influençant la qualité, en tant que reste.

2. Confiserie expansée sèche selon la revendication 1, caractérisée en ce qu'elle contient comme édulcorant un ou plusieurs glucides, succédanés de sucre et/ou édulcorants intenses.

3. Confiserie expansée sèche selon la revendication 1, caractérisée en ce qu'elle contient comme édulcorant du saccharose, du glucose, du fructose, du maltose, du lactose, du sirop de glucose, de la maltodextrine, du sorbitol, de l'isomalt, du maltitol, du sirop de maltitol, du lactitol, du xylitol, du mannitol, du polydextrose et/ou des édulcorants de synthèse tels que la saccharine, les cyclamates et l'aspartam.

4. Confiserie expansée sèche selon au moins l'une revendications 1 à 3, caractérisée en ce que la structure poreuse présente des cavités ayant un diamètre moyen de 0,5 à 1,5 mm.

5. Confiserie expansée sèche selon l'une des revendication 1 à 4, caractérisée en ce qu'elle présente une cavité centrale ayant un diamètre moyen allant jusqu'à 10 mm, de préférence de 3 à 5 mm, entourée de la structure poreuse régulière.

6. Confiserie expansée sèche selon les revendications 1 à 5, caractérisée en ce qu'elle contient en outre un hydrocolloïde en une proportion de 0 à 30 % en poids, de préférence de 1 à 8 % en poids.

7. Confiserie expansée sèche selon la revendication 6, caractérisée en ce qu'elle contient comme hydrocolloïde de la gomme arabique, de la gomme adragante, du gellane, de l'amidon, de l'amidon modifié, de la pectine, du carraghénane, de la farine de graines de caroube, de la gomme xanthane, un alginate, de la farine de graines de guar, de l'agar et/ou du glucomannane.

8. Confiserie expansée sèche selon au moins l'une des revendications 1 à 7, caractérisée en ce qu'elle présente une teneur en eau résiduelle de 1 à 2 % en poids.

9. Confiserie expansée sèche selon au moins l'une des revendications 1 à 8, caractérisée en ce qu'elle est expansée avec du dioxyde de carbone formé in situ.

10. Confiserie expansée sèche selon la revendication 9, caractérisée en ce qu'elle est expansée avec du dioxyde de carbone formé in situ à partir d'un carbonate approprié pour produits alimentaires et d'un acide organique et/ou d'un acide minéral.

11. Confiserie expansée sèche selon la revendication 10, caractérisée en ce qu'elle est expansée au moyen de carbonate de calcium, carbonate de sodium, hydrogénocarbonate de sodium, carbonate d'ammonium, hydrogénocarbonate d'ammonium et/ou carbonate de magnésium en tant que carbonate et d'acide phosphorique, acide citrique, acide tartrique, acide malique et/ou acide lactique en tant qu'acide.

12. Confiserie expansée sèche selon au moins l'une des revendications précédentes, caractérisée en ce qu'elle contient comme composants odorants, aromatisants et/ou colorants des aromatisants naturels et/ou synthétiques, des vitamines, des substances minérales et/ou des colorants.

13. Confiserie expansée sèche selon au moins l'une des revendications précédentes, caractérisée en ce qu'elle présente un enrobage superficiel et/ou des composants pour produits alimentaires, en une proportion totale de 0 à 80 % en poids, de préférence de 0,2 à 10 % en poids.

14. Confiserie expansée sèche selon la revendication 13, caractérisée en ce qu'elle présente un enrobage superficiel de chocolat et/ou d'un glaçage et, comme composants pour produits alimentaires, des composants solides de confiserie tels que des morceaux de caramel dur, des nougatines, des graines, telles que des noix, noisettes, amandes et cacahuètes et/ou des composants à base de fruits.

15. Procédé pour la fabrication de la confiserie expansée sèche selon les revendications 1 à 12, caractérisé en ce que l'on sèche un mélange aqueux liquide à très visqueux, ayant une teneur en matière sèche de 70 à 90 % en poids, constitué de l'édulcorant en une quantité résultant en une teneur en édulcorant de 20 à 98 % en poids, des composants requis pour la formation in situ du dioxyde de carbone gazeux, ainsi qu'éventuellement d'un ou plusieurs hydrocolloïdes, aromatisants naturels et/ou de synthèse, parfums, colorants, d'une ou plusieurs vitamines et/ou substances minérales, et d'eau en tant que reste, avec expansion à une teneur en eau de 0,01 à 5 % en poids et une densité de 0,2 à 0,6 g/cm³ - calculée en tant que produit de base expansé sans enrobage superficiel ni composants solides de confiserie - et ayant une structure poreuse à cavités de type cellule fermée ayant un diamètre moyen de 0,1 à 2,5 mm.

16. Procédé selon la revendication 15, caractérisé en ce que l'on effectue le séchage dans des moules.

17. Procédé selon la revendication 15, caractérisé en ce que l'on effectue le séchage dans des moules en silicone poreux ou dans des moules à poudre d'amidon.

18. Procédé selon la revendication 15, caractérisé en ce que l'on effectue le séchage à l'aide d'un sécheur à bande transporteuse et à vide.

19. Procédé selon la revendication 15, caractérisé en ce que l'on effectue le séchage en chute libre dans une colonne de séchage ou un sécheur à lit fluidisé.
